(19) Europäisches Patentamt
European Patent Office
Office européen des brevets

(11) **EP 4 339 239 A1**

(12) **EUROPEAN PATENT APPLICATION**

(43) Date of publication:
**20.03.2024 Bulletin 2024/12**

(21) Application number: **22195647.7**

(22) Date of filing: **14.09.2022**

(51) International Patent Classification (IPC):
**C08L 23/12** *(2006.01)*

(52) Cooperative Patent Classification (CPC):
(C-Sets available)
**C08L 23/12;** C08L 2205/03; C08L 2207/02;
C08L 2207/20 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Basell Poliolefine Italia S.r.l.**
**20121 Milano (IT)**

(72) Inventors:
• **SPATARO, Stefano**
**44122 Ferrara (IT)**
• **TARTARI, Davide**
**44122 Ferrara (IT)**
• **COVA, Cristina**
**44122 Ferrara (IT)**
• **CAVALIERI, Claudio**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(54) **POLYOLEFINS COMPOSITIONS OBTAINED FROM RECYCLED POLYOLEFINS**

(57) A polypropylene composition comprising A polypropylene composition comprising:
(a) from 55 wt% to 80 wt% of a crystalline propylene polymer
(b) from 12 wt% to 30 wt% of an elastomeric copolymer of ethylene and propylene; and
(c) from 8 wt% to 25 wt%, of recycled polyethylene (r-PE).

EP 4 339 239 A1

(52) Cooperative Patent Classification (CPC): (Cont.)

C-Sets
**C08L 23/12, C08L 23/16, C08L 23/04**

**Description**

FIELD OF THE INVENTION

The present disclosure relates to polyolefin compositions containing recycled polyethylene that can be used in injection molded articles particularly for grates and pails.

BACKGROUND OF THE INVENTION

Polyolefin compositions for this use are described in WO2006/125720 as being made of a) 65-77%, preferably 70 to 77%, of a crystalline propylene polymer having an amount of isotactic pentads (mmmm), measured by $^{13}$C-MNR on the fraction insoluble in xylene at 25°C, higher than 97.5 molar % and a polydispersity index ranging from 5 to 10; b) 8 to less than 13%, preferably 9 to 12%, of an elastomeric copolymer of ethylene and propylene, the copolymer having an amount of recurring units deriving from ethylene ranging from 30 to 70%, preferably 35 to 60%, and being partially soluble in xylene at ambient temperature; the polymer fraction soluble in xylene at ambient temperature having an intrinsic viscosity value ranging from 2 to 4 dl/g; and c) 10-23%, preferably 10 to 20%, of polyethylene having an intrinsic viscosity value ranging from 1.5 to 4 dl/g and optionally containing recurring units derived from propylene in amounts lower than 10%.

Polyolefin compositions suitable for these applications are endowed with good stiffness, impact resistance and stress-whitening resistance.

Generally speaking, polyolefin compositions, although being appreciated in terms of performances, give raise to concerns in terms of sustainability with particular reference to the fact that their production is based on the use of non-renewable sources.

As a result, a common attempt to mitigate the problem is that of using, in multicomponent polyolefin compositions, variable amounts of recycled polyolefins such as polypropylene or polyethylene.

The recycled polyolefin derive from streams of post-consumer waste (PCW) material that undergoes various step of separation from other polymers, such as PVC, PET or PS.

One of the key problems in polyolefin recycling, especially when dealing with material streams from post-consumer waste (PCW) is the difficulty to quantitatively separate polypropylene (PP) from polyethylene (PE) and vice-versa. Thus, although named recycled PE (rPE) or recycled PP (rPP), the commercially available products from PCW sources have been found to be mixtures of PP and PE in various amounts.

This fact, associated to the presence in the recycled material of additives and minor components that may not be totally suitable for the application in which they are supposed to be used, leads to the consequence that such recycled PP/PE-blends suffer from deteriorated mechanical and optical properties and poor compatibility between the main polymer phases during remolding. The result is a perceived lower reliability of articles coming from the use of r-PP or r-PE due to the lower performances of the compositions from which they derive.

As a consequence, the use of recycled material in applications requiring a high-performance level, is strongly discouraged and limited to low-cost and non-demanding applications.

It has now been unexpectedly found that it in certain polypropylene compositions for the use in water management systems, the presence of a recycled PE component does not impair the performances and allows the process for their production to be more sustainable.

SUMMARY OF THE INVENTION

It is therefore an object of the present disclosure a polypropylene composition comprising:

(a) from 55 wt% to 80 wt%, preferably from 60 wt% to 77 wt%, more preferably from 63 wt% to 75% of a crystalline propylene polymer having an amount of isotactic pentads (mmmm), measured by 13C-MNR on the fraction insoluble in xylene at 25° C, higher than 97.0 molar% and a polydispersity index ranging from 3 to 15;

(b) from 12 wt% to 30 wt%, preferably from 15 wt% to 23 wt%, more preferably from 17 wt% to 21 wt% of an elastomeric copolymer of ethylene and propylene, the copolymer having an amount of recurring units deriving from ethylene, measured by 13C-MNR, ranging from 30.0 wt% to 70.0 wt%, preferably 35.0 wt% to 60.0 wt; more preferably from 40.0 wt% to 53.0 wt%,

wherein in the blend of components a) and b):

i) the polymer fraction soluble in xylene at 25°C of components a)+ b) ranging from 12.0 wt% to 28.5 wt%; preferably ranging from 15.0 wt% to 26.2 wt%; more preferably ranging from 17.0 wt% to 24.1 wt%;

ii) the polymer fraction soluble in xylene at 25°C of components a) + b) having an intrinsic viscosity value, measured in tetrahydronaphthalene at 135°C, ranging from 1.5dl/g to 2.8 dl/g; preferably ranging from 1.7dl/g to 2.7 dl/g; more preferably ranging from 1.8 dl/g to 2.6 dl/g;

iii) the ethylene derived units content, measured by $^{13}$C-MNR, in the fraction soluble in xylene at 25°C of components a) + b ranging from 27.4 wt% to 47.5 wt%; preferably ranging from 31.0 wt% to 42.0 wt% , more preferably ranging from 35.0 wt% to 40.0 wt%;

iv) the melting point, measured by DSC, of components a) + b ranging from 148.0°C to 168.0°C; preferably ranging from 154.0°C to 167.0 °C; more preferably ranging from 162.0°C to 166°C

v) the melt flow rate (ISO 1133-1 230°C/2.16 kg) of components a) + b ranging from 10.0 to 30.0 g/10 min; preferably ranging from 13.0 to 25.0 g/10 min, more preferably ranging from 16.0 to 22.0 g/10 min;

the polypropylene composition further comprises:

(c) from 8 wt% to 25 wt %, preferably from 8 wt% to 20 wt %, more preferably from 8 wt% to 15 wt% of recycled polyethylene (r-PE) having a melt flow rate (ISO 1133-1 190°C/2.16 Kg) from 0.1 to 10 g/10min and containing an amount of polypropylene inclusions ranging from 1 wt% to 15 w%t of the total r-PE component,
the whole composition having a value of melt flow rate (ISO 1133-1 230°C/2.16 kg) ranging from5.0 g/10min to 22.0 g/10min; preferably from 8.0 g/10min to 17.0 g/10min, more preferably from 10.0 g/10min to 15.0 g/10min;
the percentages of (a), (b) and (c) being referred to the sum of (a), (b) and (c).

DETAILED DESCRIPTION OF THE INVENTION

The term "copolymer" as used herein refers to both polymers with two different recurring units and polymers with more than two different recurring units, such as terpolymers, in the chain. By "ambient temperature" is meant therein a temperature of 25°C (room temperature).

By the term "crystalline propylene polymer" is meant in the present application a propylene polymer having an amount of isotactic pentads (mmmm), measured by $^{13}$C-MNR on the fraction insoluble in xylene at 25° C, higher than 70 molar %; by "elastomeric" polymer is meant a polymer having solubility in xylene at ambient temperature higher than 50 wt%.

All features of the copolymers (a)-(c) are not inextricably linked to each other. This means that a certain level of preference of one the features should not necessarily involve the same level of preference of the remaining features.

Crystalline propylene polymer (a) is selected from a propylene homopolymer and a copolymer of propylene containing at most 3.0 wt% of ethylene or a $C_4$-$C_{10}$ $\alpha$-olefin or combination thereof. Particularly preferred is the propylene homopolymer.

Preferably, the polydispersity Index ranges from 3 to 10.

The r-PE (c) is crystalline or semicrystalline high density PE (r-HDPE) selected from commercial PCW (Post Consumer Waste for example from municipality). Preferably r-PE (c) has a density (ISO 1183-1) ranging from 0.940 to 0.965 and a melt flow rate (ISO 1133-1 190°C/2.16 Kg) from 0.1 to 1.0 g/10 min.

Prior its use, the plastic mixture containing rHDPE undergoes standard recycling process including collection, shredding, sorting and washing. Although the sorted rHDPE is constituted by a large preponderance of HDPE it invariably contains minor amounts of other polymeric and/or inorganic components. In particular, the r-PE according to the present disclosure, contains inclusion of polypropylene in an amount from 1 to 15% wt preferably from 5% up to 10%wt of the total r-PE component.

In a preferred embodiment, the r-PE includes a crystalline polyethylene fraction in which in which the amount of recurring units derived from propylene in the polyethylene chains is lower than 11 wt% and most preferably they are absent, i.e, most preferably r-PE is ethylene homopolymer containing the above mentioned inclusions. Preferably, the (r-PE) has a melt flow rate (ISO 1133-1 190°C/2.16 Kg ISO 1133-1) from 0.1 to 1.0 g/10min and more preferably from 0.1 to 0.5 g/10min.

The r-PE is commercially available. An example of a suitable r-PE grade is represented by the grade sold by Lyondellbasell under the tradename *Hostalen* QCP5603 in the ivory or grey versions.

The composition of the present disclosure preferably shows a tensile modulus value of at least 800 MPa, preferably from 900 to 1500 MPa, even more preferably from 950 MPa, to 1200 MPa.

The value of Charpy impact resistance at 23° C is preferably higher than 10.0 kJ/m2, preferably ranges from 11.0 to 25.0 kJ/m2, more preferably ranges from 13.0 to 21.0 kJ/m2 ; the Charpy impact resistance at 0° C is preferably more than 6.0 kJ/m2, preferably ranges from 7.0 to 18.0 kJ/m2, more preferably ranges from 8.0 to 14.0 kJ/m2 and the Charpy impact resistance at - 20° C is preferably of at least 4.0 kJ/m2 ;preferably ranges from 5.0 to 12.0 kJ/m2.

The composition of the present disclosure can be obtained by mechanical blending of the components (a)-(c) according to conventional techniques.

According to a preferred method of preparation, component (c) is mechanically blended with a preformed heterophasic composition comprising components (a) and (b) associated together by means of a sequential copolymerization process.

The said process comprises polymerizing propylene alone or in mixture with a low amount of ethylene in a first stage and then, in a second stage, polymerizing propylene with a higher amount of ethylene, both stages being conducted in the presence of a catalyst comprising the product of the reaction between:

> i) a solid catalyst component comprising Ti, Mg, Cl, and at least an internal electron donor compound;
> ii) an alkylaluminum compound and,
> iii) an external electron-donor compound having the general formula:
> (R7)a(R8)bSi(OR9)c, where a and b are integers from 0 to 2, c is an integer from 1 to 4 and the sum (a+b+c) is 4;
> R7, R8, and R9, are alkyl, cycloalkyl or aryl radicals with 1-18 carbon atoms optionally containing heteroatoms.

The internal donor is preferably selected from the esters of mono or dicarboxylic organic acids such as benzoates, malonates, phthalates and certain succinates. Examples of internal donors are described in US 4522930A, EP 045977A2 and international patent applications WO 00/63261 and WO 01/57099. Particularly suited are the phthalic acid esters and succinate acids esters. Alkylphthalates are preferred, such as diisobutyl, dioctyl and diphenyl phthalate and benzyl-butyl phthalate.

The particles of solid component (i) may have substantially spherical morphology and average diameter ranging between 5 and 150 $\mu$m, preferably from 20 to 100 $\mu$m and more preferably from 30 to 90 $\mu$m. As particles having substantially spherical morphology, those are meant wherein the ratio between the greater axis and the smaller axis is equal to or lower than 1.5 and preferably lower than 1.3.

The amount of Mg may preferably range from 8 to 30% more preferably from 10 to 25wt. %.

The amount of Ti may range from 0.5 to 7% and more preferably from 0.7 to 5wt. %.

According to one method, the solid catalyst component (i) can be prepared by reacting a titanium compound of formula $Ti(OR)_{q-y}X_y$, where q is the valence of titanium and y is a number between 1 and q, preferably $TiCl_4$, with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is of lower than 3, preferably between 0.1 and 2.5. The reaction with the Ti compound can be carried out by suspending the adduct (dealcoholated or as such) in cold $TiCl_4$; the mixture is heated up to 80-130°C and kept at this temperature for 0.5-2 hours. The treatment with $TiCl_4$ can be carried out one or more times. The electron donor compound can be added in the desired ratios during the treatment with $TiCl_4$.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $Al_2Et_3Cl_3$, possibly in mixture with the above cited trialkylaluminums. The Al/Ti ratio is higher than 1 and may preferably range between 50 and 2000.

Particularly preferred are the silicon compounds (iii) in which a is 1, b is 1, c is 2, at least one of R7 and R8 is selected from branched alkyl, cycloalkyl or aryl groups with 3-10 carbon atoms optionally containing heteroatoms and R9 is a C1-C10 alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, are also preferred the silicon compounds in which a is 0, c is 3, R8 is a branched alkyl or cycloalkyl group, optionally containing heteroatoms, and R9 is methyl. Examples of such preferred silicon compounds are cyclohexyltrimethoxysilane, t-butyltrimethoxysilane and thexyltrimethoxysilane.

The external electron donor compound (iii) is used in such an amount to give a molar ratio between the organoaluminum compound and said external electron donor compound (iii) of from 0.1 to 200, preferably from 1 to 100 and more preferably from 3 to 50.

The polymerization process can be carried out in gas-phase, operating in one or more fluidized or mechanically agitated bed reactors, slurry polymerization using as diluent an inert hydrocarbon solvent, or bulk polymerization using the liquid monomer (for example propylene) as a reaction medium.

Preferably, the heterophasic composition used in the present disclosure is obtained with a sequential polymerization process in two or more stages in which component (a) is obtained in the first stage and then component (b) is obtained in the second stage in the presence of component (a). Each stage can be in gas-phase, operating in one or more fluidized or mechanically agitated bed reactors, or bulk polymerization using the liquid monomer (for example propylene) as a reaction medium. Also preferred are hybrid processes in which one stage, preferably that in which component (a) is prepared, is carried out in liquid monomer and another stage, preferably that in which the component (b) is prepared, is carried out in gas-phase.

According to a preferred embodiment component (a) is prepared in a gas-phase reactor, as described EP 782587, comprising a first and in a second interconnected polymerization zone to which propylene and optionally ethylene are fed in the presence of a catalyst system and from which the polymer produced is discharged. The growing polymer particles flow through the first of said polymerization zones (riser) under fast fluidization conditions, leave said first polymerization zone and enter the second of said polymerization zones (downcomer) through which they flow in a densified form under the action of gravity, leave said second polymerization zone and are reintroduced into said first polymerization zone, thus establishing a circulation of polymer between the two polymerization zones. Generally, the conditions of fast fluidization in the first polymerization zone is established by feeding the monomers gas mixture below the point of reintroduction of the growing polymer into said first polymerization zone. The velocity of the transport gas into the first polymerization zone is higher than the transport velocity under the operating conditions and is normally between 2 and 15 m/s. In the second polymerization zone, where the polymer flows in densified form under the action of gravity, high values of density of the solid are reached which approach the bulk density of the polymer; a positive gain in pressure can thus be obtained along the direction of flow, so that it becomes possible to reintroduce the polymer into the first reaction zone without the help of mechanical means. In this way, a "loop" circulation is set up, which is defined by the balance of pressures between the two polymerization zones and by the head loss introduced into the system. Optionally, one or more inert gases, such as nitrogen or an aliphatic hydrocarbon, are maintained in the polymerization zones, in such quantities that the sum of the partial pressures of the inert gases is preferably between 5 and 80% of the total pressure of the gases. Preferably, the various catalyst components are fed to the first polymerization zone, at any point of said first polymerization zone. However, they can also be fed at any point of the second polymerization zone. Molecular weight regulators known in the art, particularly hydrogen, can be used to regulate the molecular weight of the growing polymer. Should a bimodal set-up be desired the use of a barrier stream as described EP-A-1012195 separating the polymerization environment of riser and downer can be used.

The polymerization is may be carried out at temperature of from 20 to 120°C, preferably of from 40 to 80°C. When the polymerization is carried out in gas-phase the operating pressure may range between 0.5 and 5 MPa, preferably between 1 and 4 MPa. In the bulk polymerization the operating pressure may range between 1 and 8 MPa, preferably between 1.5 and 5 MPa. Hydrogen can be used as a molecular weight regulator.

If needed, the final heterophasic composition comprising (a)+(b) can be subject to a chemical treatment with organic peroxides in order to lower the average molecular weight and increase the melt flow index up to the value needed for the specific application.

The final composition comprising the components (a)-(c) may be added with conventional additives, fillers and pigments, commonly used in olefin polymers such as nucleating agents, extension oils, mineral fillers, and other organic and inorganic pigments. In particular, the addition of inorganic fillers, such as talc, calcium carbonate and mineral fillers, also brings about an improvement to some mechanical properties, such as flexural modulus and HDT. Talc can also have a nucleating effect.

The nucleating agents are added to the compositions of the present disclosure in quantities ranging from 0.05 to 2% by weight, more preferably from 0.1 to 1% by weight, with respect to the total weight, for example.

The polypropylene composition object of the present disclosure can be used for obtaining injection moulded articles for a variety of objects. Particularly preferred is the use of the polypropylene compositions for the preparation automotive battery cases.

As shown in the examples below, the composition employing r-PE does not show any worsening of the properties with respect to compositions employing virgin PE with similar features.

The following examples are given in order to illustrate, but not limit the present disclosure.

## EXAMPLES

## CHARACTERIZATIONS

### Xylene-soluble (XS) Fraction at 25 °C

2.5 g of polymer and 250 ml of xylene are introduced in a glass flask equipped with a refrigerator and a magnetic stirrer. The temperature is raised in 30 minutes up to the boiling point of the solvent. The resulting clear solution is then kept under reflux and stirred for 30 minutes. The closed flask is then kept for 30 minutes in a bath of ice and water, then in a thermostatic water bath at 25 °C for 30 minutes. The resulting solid is filtered on quick filtering paper. 100 ml of the filtered liquid is poured in a previously weighed aluminum container, which is heated on a heating plate under nitrogen flow to remove the solvent by evaporation. The container is then kept on an oven at 80 °C under vacuum until a constant weight is obtained. The weight percentage of polymer soluble in xylene at room temperature is then calculated.

The content of the xylene-soluble fraction is expressed as a percentage of the original 2.5 grams and then, by the difference (complementary to 100%), the xylene insoluble percentage (%);

**Melt Flow Rate (MFR)**

Measured according to ISO 1133-1 at 230 °C with a load of 2.16 kg, unless otherwise specified.

**Density**

Measured according to ISO 1183-1

**Intrinsic Viscosity (IV)**

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [ $\eta$ ].

<u>Polydispersity index</u>: Determined at a temperature of 200 °C by using a parallel plates rheometer model RMS-800 marketed by RHEOMETRICS (USA), operating at an oscillation frequency which increases from 0.1 rad/sec to 100 rad/sec. From the crossover modulus one can derive the P.I. by way of the equation:

$$P.I. = 105/Gc$$

in which Gc is the crossover modulus which is defined as the value (expressed in Pa) at which G'=G" wherein G' is the storage modulus and G" is the loss modulus.

**Ethylene (C2) content**

**$^{13}$C NMR of propylene/ethylene copolymers**

13C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with $\delta$-titanium trichloride-diethylaluminum chloride" M. Kakugo, Y. Naito, K. Mizunuma and T. Miyatake, Macromolecules, 1982, 15, 1150) using the following equations:

$$PPP = 100\, T_{\beta\beta}/S \qquad PPE = 100\, T_{\beta\delta}/S \qquad EPE = 100\, T_{\delta\delta}/S$$
$$PEP = 100\, S_{\beta\beta}/S \qquad PEE = 100\, S_{\beta\delta}/S \qquad EEE = 100\, (0.25\, S_{\gamma\delta}+0.5\, S_{\delta\delta})/S$$

$$S = T_{\beta\beta} + T_{\beta\delta} + T_{\delta\delta} + S_{\beta\beta} + S_{\beta\delta} + 0.25\, S_{\gamma\delta} + 0.5\, S_{\delta\delta}$$

The molar percentage of ethylene content was evaluated using the following equation:
E% mol = 100 * [PEP+PEE+EEE]The weight percentage of ethylene content was evaluated using the following equation:

$$E\% \; wt. = \frac{100 * E\% \; mol * MW_E}{E\% \; mol * MW_{E} + P\% \; mol * MW_P}$$

where P% mol is the molar percentage of propylene content, while MWE and MWP are the molecular weights of ethylene and propylene, respectively.

The product of reactivity ratio rlr2 was calculated according to Carman (C.J. Carman, R.A. Harrington and C.E. Wilkes, Macromolecules, 1977; 10, 536) as:

$$r_1 r_2 = 1 + \left( \frac{EEE + PEE}{PEP} + 1 \right) - \left( \frac{P}{E} + 1 \right) \left( \frac{EEE + PEE}{PEP} + 1 \right)^{0.5}$$

The tacticity of Propylene sequences was calculated as mm content from the ratio of the PPP mmT$\beta\beta$ (28.90-29.65 ppm) and the whole T$\beta\beta$ (29.80-28.37 ppm).

Ethylene C2 content of component b has been measured by measuring the C2 content of the composition and then calculated by using the formula C2tot=XbC2 wherein Xb is the amount of component b in the composition.

**Samples for the mechanical tests**

Samples have been obtained according to ISO 1873-2:2007.

**Charpy impact test** is determined according to ISO 179-1eA, and ISO 1873-2
**Elongation at yield:** measured according to ISO 527.
**Elongation at break:** measured according To ISO 527
**Stress at break:** measured according to ISO 527.
**Tensile Modulus** according to ISO 527-2,
**Melting point and crystallization point**

The melting point has been measured by using a DSC instrument according to ISO 11357-3, at scanning rate of 20°C/min both in cooling and heating, on a sample of weight between 5 and 7 mg., under inert $N_2$ flow. Instrument calibration made with Indium.

**Determination of PP inclusions in r-PE**

$^{13}$C NMR spectra were acquired on a Bruker AV-600 spectrometer equipped with cryoprobe, operating at 160.91 MHz in the Fourier transform mode at 120°C.

The peak of the $CH_2$ ethylene was used as internal reference at 29.9 ppm. The samples were dissolved in 1,1,2,2-tetrachloroethane-*d2* at 120°C with a 8 % wt/v concentration. Each spectrum was acquired with a 90° pulse, 15 seconds of delay between pulses and CPD to remove $^1$H-$^{13}$C coupling. 512 transients were stored in 32K data points using a spectral window of 9000 Hz.

Molar composition was obtained according to the following using peak areas (table 1):

$$P = 100 \; A_3/S$$

$$E = 100 \; 0.5A_2/S$$

$$S = 0.5A_2 + A_3$$

Molar content was transformed in weight using monomers molecular weight.

Table A: Assignment of PP/PE mixtures

| Number | Chemical Shift (ppm) | Carbon | Sequence |
|--------|---------------------|--------|----------|
| 1 | 48.8-45.4 | $CH_2$ | P |
| 2 | 29.9 | $CH_2$ | E |
| 3 | 29.0-28.0 | CH | P |
| 4 | 21.8-19.8 | CH3 | P |

EXAMPLES

Example 1

In a plant operating continuously according to the mixed liquid-gas polymerization technique, runs were carried out under the conditions specified in Table 1.

The polymerization was carried out in the presence of a catalyst system in a series of two reactors equipped with devices to transfer the product from one reactor to the one immediately next to it.

Preparation of the solid catalyst component

Into a 500 ml four-necked round flask, purged with nitrogen, 250 ml of $TiCl_4$ are introduced at 0° C. While stirring, 10.0 g of microspheroidal $MgCl_2 \cdot 1.9C_2H_5OH$ (prepared according to the method described in ex.2 of USP 4,399,054 but operating at 3000 rpm instead of 10000 rpm) and 9.1 mmol of diethyl 2,3-(diisopropyl)succinate are added. The temperature is raised to 100° C and maintained for 120 min. Then, the stirring is discontinued, the solid product was allowed to settle and the supernatant liquid is siphoned off. Then 250 ml of fresh $TiCl_4$ are added. The mixture is reacted at 120° C for 60 min and, then, the supernatant liquid is siphoned off. The solid is washed six times with anhydrous hexane (6×100 ml) at 60° C.

Catalyst system and prepolymerization treatment

The solid catalyst component described above was contacted at 12° C for 24 minutes with aluminium triethyl (TEAL) and dicyclopentyldimethoxysilane (DCPMS) as outside-electron-donor component. The weight ratio between TEAL and the solid catalyst component and the weight ratio between TEAL and DCPMS are specified in Table 1.

The catalyst system is then subjected to prepolymerization by maintaining it in suspension in liquid propylene at 20° C for about 5 minutes before introducing it into the first polymerization reactor.

Polymerization components a) and b)

The polymerisation run is conducted in continuous in a series of two reactors equipped with devices to transfer the product from one reactor to the one immediately next to it. The first reactor is a gas-phase polymerization reactor having two interconnected polymerization zones. (riser and downer) as described in the European patent EP 782587. The second reactor is a fluidized bed gas phase reactors. Polymer (a) is prepared in the first reactor, while polymer (b) is prepared in the second reactor, respectively. Temperature and pressure are maintained constant throughout the course of the reaction. Hydrogen is used as molecular weight regulator.

The gas phase (propylene, ethylene and hydrogen) is continuously analysed via gas-chromatography.

At the end of the run the powder is discharged and dried under a nitrogen flow. The polymerization parameters are reported on table 1

Table 1 - Polymerization Process

| | | Ex 1 | comp Ex 2 |
|--------------------|-------|------|-----------|
| Component A | | | |
| TEAL/external donor | wt/wt | 10 | 5 |
| TEAL/catalyst | wt/wt | 6 | 5 |

(continued)

|  |  | Ex 1 | comp Ex 2 |
|---|---|---|---|
| Temperature | °C | 70 | 70 |
| Pressure | barg | 27 | 27 |
| $H_2/C_3^-$ riser | mol/mol | 0.026 | 0.011 |
| Component B |  |  |  |
| Temperature | °C | 75 | 75 |
| Pressure | barg | 14 | 1.8 |
| Split | % | 21 | 13.5 |
| $C_2^-/C_2^-+C_3^-$ | mol/mol | 0.352 | 0.35 |
| H2/C2- | mol/mol | 0.057 | 0.014 |

Then the polymer particles of the heterophasic compositions of example 1 and comparative example 2 are introduced in a twin screw extruder (Werner-type extruder), wherein they are mixed with 10 wt% and 15 wt% (based on the total amount of polyolefins) of QCP5603 ivory (a r-PE commercialized by Lyondellbasell containing 10%wt of PP inclusions) and a standard stabilization package. The polymer particles are extruded under nitrogen atmosphere in a twin screw extruder, at a rotation speed of 250 rpm and a melt temperature of 200-250° C.

Table 2 - Characterization

| Example | 1 | comp ex 2 | 3 |
|---|---|---|---|
| component a) |  |  |  |
| Homopolymer content, wt% | 70.2 | 78 | 66.3 |
| MFR, g/10 min | - | 2.0 | - |
| Polydispersity Index | 5.6 | 5.6 | 5.6 |
| Pentad content, molar% | > 97 | > 97 | > 97 |
| Xylene soluble fraction, wt% | 1.5 | 1.5 | 1.5 |
| component b) |  |  |  |
| Copolymer content, wt% | 19.8 | 12 | 19.8 |
| Ethylene content (Calculated), wt. % | 45.0 | 47 | 45.0 |
| Intrinsic viscosity [$\eta$] of the xylene-soluble fraction, dl/g | 2.6 | 4.7 | 2.6 |
| xylene-soluble fraction, wt% | 21.7 | - | 21.7 |
| Ethylene content in the xylene soluble fraction wt% | 38.0 | - | 38.0 |
| melting point °C | 164.0 | 164.0 | 164.0 |
| MFR (a+b), g/10 min | 18.6 | - | 18.6 |
| Polyethylene content, wt% | 10 | 10 | 15 |
| Density g/cm$^3$ | 0.95 | 0.95 | 0.95 |
| Melt Index "E" g/10 min. | 0.3 | 0.3 | 0.3 |

Properties of the final compositions are reported on table 3

Table 3 - Properties of the final compositions

| Examples and comparative examples | | 1 | comp 2 | 3 |
|---|---|---|---|---|
| MFR, g/10 min | | 13.1 | 4.9 | 11.9 |
| Tensile Modulus, MPa | | 1060 | 1410 | 1090 |
| Charpy kJ/m$^2$ | at 23° C | 15.4 | 11.1 | 16.6 |
| | at 0°C | 8.9 | 7.2 | 9.3 |
| | at -20° C | 5.9 | 5.5 | 6.4 |

The above data show that the polymer compositions according to the present disclosure has a better impact properties with respect to the comparative example

**Claims**

1. A polypropylene composition comprising:

   (a) from 55 wt% to 80 wt% of a crystalline propylene polymer having an amount of isotactic pentads (mmmm), measured by $^{13}$C-MNR on the fraction insoluble in xylene at 25° C, higher than 97.0 molar% and a polydispersity index ranging from 3 to 15;
   (b) from 12 wt% to 30 wt% of an elastomeric copolymer of ethylene and propylene, the copolymer having an amount of recurring units deriving from ethylene, measured by $^{13}$C-MNR, ranging from 30.0 wt% to 70.0 wt. %;

   wherein in the blend of components a) and b):

   i) the polymer fraction soluble in xylene at 25°C of components a)+ b) ranging from 12.0 wt% to 28.5 wt%;
   ii) the polymer fraction soluble in xylene at 25°C of components a) + b) having an intrinsic viscosity value, measured in tetrahydronaphthalene at 135 °C, ranging from 1.5dl/g to 2.8 dl/g;
   iii) the ethylene derived units content, measured by 13C-MNR, in the fraction soluble in xylene at 25°C ranging from 27.4 wt% to 47.5 wt%;
   iv) the melting point, measured by DSC, ranging from 148.0°C to 168.0°C;
   v) the melt flow rate (ISO 1133-1 230°C/2.16 kg) ranging from 10.0 to 30.0 g/10 min;

   the polypropylene composition further comprises:
   (c) from 8 wt% to 25 wt%, of recycled polyethylene (r-PE) having a melt flow rate (ISO 1133-1 190°C/2.16 Kg) from 0.1 to 10 g/10min and containing an amount of polypropylene inclusions ranging from 1 wt% to 15 wt% of the total r-PE component;

   the whole composition having a value of melt flow rate (ISO 1133 230°C/2.16 kg) ranging from5.0 g/10min to 22.0 g/10min;
   the percentages of (a), (b) and (c) being referred to the sum of (a), (b) and (c).

2. The polypropylene compositions according to claim 1 wherein:

   component (a) ranges from 60 wt% to 77 wt%t;
   component (b) ranges from 15 wt% to 23 wt%;
   component (c) ranges from 8 wt% to 20wt %.

3. The polypropylene compositions according to claim 2 wherein the polymer fraction soluble in xylene at 25°C of components a)+ b) ranges from 15.0 wt% to 26.2 wt%.

4. The polypropylene compositions according to anyone of claims 1-3 having a melt flow rate (ISO 1133-1 230°C/2.16 kg) ranging from 8.0 g/10min to 17.0 g/10min.

5. The polypropylene compositions according to anyone of claims 1-4 wherein component (c) has an amount of PP inclusions ranging from 5wt% to 10wt% based on the total amount of component (c).

6. The polypropylene compositions according to anyone of claims 1-5 wherein component (c) has a density (ISO 1163-1) ranging from 0.940 to 0.965 g/cm$^3$ and a melt flow rate (ISO 1133-1 190°C/2.16 Kg ISO 1133-1) from 0.1 to 1.0 g/10 min.

7. The polypropylene compositions according to anyone of claims 1-6 wherein the polymer fraction soluble in xylene at 25°C of components a) + b) has an intrinsic viscosity value ranging from 1.7dl/g to 2.7 dl/g.

8. The polypropylene compositions according to anyone of claims 1-7 wherein the ethylene derived units content in the fraction soluble in xylene at 25°C of components a) + b) ranging from 31.0 wt% to 42.0 wt%

9. The polypropylene compositions according to anyone of claims 1-8 wherein component (b) has amount of ethylene ranging from 35 to 60wt. %.

10. The polypropylene compositions according to anyone of claims 1-9 wherein the intrinsic viscosity value, measured in tetrahydronaphthalene at 135 °C, of the xylene soluble fraction at 25°C of components a)+b) ranges from 1.7dl/g to 2.7 dl/g.

11. The polypropylene composition according to anyone of claims 1-10 wherein the melting point, measured by DSC, of components a) + b ranges from 154.0°C to 167.0 °C.

12. The polypropylene composition according to anyone of claims 1-11 wherein the melt flow rate (ISO 1133-1 230°C/2.16 kg) of components a) + b ranges from 16.0 to 22.0 g/10 min.

13. The polypropylene composition according to anyone of claims 1-12 wherein the melt flow rate (ISO 1133-1 230°C/2.16 kg) of components a) + b ranges from 13.0 to 25.0 g/10 min.

14. An injection molded article made from composition according to claims 1-13.

15. The injection molded article of claim 14 having the form of an automotive battery case.

Europäisches
Patentamt

European
Patent Office

Office européen
des brevets

## EUROPEAN SEARCH REPORT

Application Number

EP 22 19 5647

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/002601 A1 (BASELL POLIOLEFINE ITALIA SRL [IT]) 6 January 2022 (2022-01-06) * page 16 - page 18; example 1; tables 1,2,3 * * claims 1-15 * * paragraphs [0001], [0003], [0004], [0007] - [0014] * ----- | 1-15 | INV. C08L23/12 |
| A | WO 2006/067023 A1 (BASELL POLIOLEFINE SRL [IT]; MASSARI PAOLA [IT] ET AL.) 29 June 2006 (2006-06-29) * page 17 - page 18; example 1; tables 2,3 * ----- | 1-15 | |

TECHNICAL FIELDS
SEARCHED       (IPC)

C08L

The present search report has been drawn up for all claims

| Place of search | Date of completion of the search | Examiner |
|---|---|---|
| Munich | 3 February 2023 | Lippert, Sigrid |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 19 5647

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2023

| Patent document cited in search report | | Publication date | Patent family member(s) | | Publication date |
|---|---|---|---|---|---|
| WO 2022002601 | A1 | 06-01-2022 | NONE | | |
| WO 2006067023 | A1 | 29-06-2006 | AT | 424435 T | 15-03-2009 |
| | | | AU | 2005318245 A1 | 29-06-2006 |
| | | | BR | PI0518119 A | 28-10-2008 |
| | | | CA | 2592143 A1 | 29-06-2006 |
| | | | CN | 101084268 A | 05-12-2007 |
| | | | EP | 1828304 A1 | 05-09-2007 |
| | | | JP | 2008525548 A | 17-07-2008 |
| | | | TW | 200624497 A | 16-07-2006 |
| | | | US | 2008167428 A1 | 10-07-2008 |
| | | | WO | 2006067023 A1 | 29-06-2006 |

EPO FORM P0459

For more details about this annex : see Official Journal of the European Patent Office, No. 12/82

# EP 4 339 239 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006125720 A
- US 4522930 A
- EP 045977 A2
- WO 0063261 A
- WO 0157099 A
- US 4399054 A
- US 4469648 A
- EP 782587 A
- EP 1012195 A

### Non-patent literature cited in the description

- **HUGGINS, M.L.** *J. Am. Chem. Soc.,* 1942, vol. 64, 2716
- **C. J. CARMAN ; R. A. HARRINGTON ; C. E. WILKES.** Monomer Sequence Distribution in Ethylene-Propylene Rubber Measured by 13C NMR. 3. Use of Reaction Probability Mode. *Macromolecules,* 1977, vol. 10, 536
- **KAKUGO ; M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride-diethylaluminum chloride. *Macromolecules,* 1982, vol. 15, 1150
- **C.J. CARMAN ; R.A. HARRINGTON ; C.E. WILKES.** *Macromolecules,* 1977, vol. 10, 536